# EUROPEAN PATENT APPLICATION

(11) **EP 2 034 544 A1**
(43) Date of publication of application: **11.03.2009**
(21) Application number: 07425553.0
(22) Date of filing: 07.09.2007
(51) Int. Cl.: H01M 8/02

(54) **Bipolar plate for fuel cells**

(71) Applicant: Exergy Fuel Cells S.R.L., 40057 Granarolo dell'Emilia (BO) (IT)
(72) Inventor: D'anzi Angelo, 40059 Medicina (IT)
(74) Representative: Alagem Modiano, Lara S.

(57) **Abstract**

A fuel cell (1), of the type constituted by at least one pair (2) of bipolar plates (3) whose outer surfaces (4) are provided with contoured grooves (5) for conveying the reagents, between which respective membranes (6) which contain the surfaces of the electrodes (7) are interposed. The plates (3) delimit, with their internal surfaces suitably provided with channels (9), a path for suitable flows of cooling fluid. A region (13) which is open toward the outside environment is provided between the elementary cell (10), which is constituted by inflow and outflow manifolds (11) for reagents and by the contoured grooves (5) provided on the outer surface (4) of the plates (3) between which the respective membrane (6) is interposed, and the cooling circuits, which are constituted by the paths for the cooling fluid and by the respective areas (12) for the inflow and outflow of the cooling fluid, which are formed between two surfaces of contiguous plates (3), the open region (13) being adapted to drain externally any leaks of the cooling circuit, preventing the introduction of the leaks into the surfaces (4) provided with grooves for circulating the reagents.

## Description

The present invention relates to a bipolar plate for fuel cells.

A fuel cell is an electrochemical device which uses a reaction between hydrogen and oxygen to generate electric power. The device is composed of a series of elementary cells termed MEA (Membrane Electrode Assembly), which are mutually separate by a current collector known as bipolar plate.

The elementary cells ensure the circulation of a current which depends on their size at a voltage comprised between 1 V when the circuit is open and 0.6 V when subjected to a full load.

In order to raise the voltage to a value suitable for applications, it is necessary to stack a plurality of MEA elementary cells in series, so as to multiply the voltage. This is done by interposing, between each MEA elementary cell, a bipolar plate which is designed to provide the electrical series connection among the various cells.

The bipolar plate is constituted by two plate halves which are welded or bonded together: a cooling circuit is formed between the two plate halves and is constituted by a series of parallel channels in which cooling liquid, typically demineralized water, flows, said liquid being needed to remove the heat generated by the reactions that occur in the elementary cells. Moreover, on the surface of the bipolar plate, on both sides, there is a series of channels, known as "flow fields", which ensure the diffusion of the reagents on the surface of the MEA elementary cell.

The gaskets around the MEA elementary cells ensure the seals between the various compartments of the cell, air, hydrogen, and water, so as to avoid transfers of fluid among the various circuits.

Since a set (stack) of fuel cells can include even several hundred MEA elementary cells and bipolar plates stacked in series, it is absolutely impossible to ensure total tightness among the three circuits: therefore, the persistence of some seepage is acknowledged.

For this reason, in the background art of the technology in this field it is absolutely critical to use an antifreeze fluid (i.e., a fluid with an extremely low solidification temperature, adapted to work even at temperatures far below 0°C) as coolant, since any seepage of antifreeze fluid into the reagents would reach directly the MEA elementary cell, destroying it irreparably.

Currently there are two strategies to obviate this problem: the first and most widely used one is the use of demineralized water, which would cause no problems to the MEA elementary cell even if it should seep.

However, demineralized water does not allow operation at temperatures below 0°C and entails intense oxidative and corrosive processes induced by the water itself.

The second, less common strategy is to use antifreeze fluid as a cooling liquid (taking care to choose it among fluids which also act as corrosion inhibitors), keeping the pressure of the reagents higher than the pressure of the cooling liquid, so that the leaks of reagents are conveyed into the cooling liquid and not vice versa, avoiding any risk of contamination of the MEA elementary cell.

This last strategy, being controlled by software-based operating logic, does not ensure reliability in operation and therefore the system is not inherently safe.

The aim of the present invention is to provide a fuel cell which ensures the use of an antifreeze fluid as cooling liquid without risks of damage to the MEA elementary cells.

Within this aim, an object of the present invention is to provide a fuel cell with simplified operation which does not require control of the operating pressure of the reagents and of the cooling fluid that are present within the cell.

Another object of the present invention is to provide a fuel cell which has a low cost, is relatively simple to provide in practice, and is safe in application.

This aim, this object and others which will become better apparent hereinafter are achieved by the present fuel cell, of the type constituted by at least one pair of bipolar plates whose outer surfaces are provided with contoured grooves for conveying the reagents, between which respective membranes which contain the surfaces of the electrodes are interposed, said plates delimiting, with their internal surfaces suitably provided with channels, a path for suitable flows of cooling fluid, **characterized in that** a region which is open toward the outside environment is provided between the elementary cell, which is constituted by inflow and outflow manifolds for suitable reagents and by said contoured grooves provided on the outer surface of said plates between which the respective membrane is interposed, and the cooling circuits, which are constituted by said paths for said cooling fluid and by the respective areas for the inflow and outflow of said coolant fluid, which are formed between two surfaces of contiguous plates, said open region being adapted to drain externally any leaks of the cooling circuit, preventing the introduction of said leaks into the surfaces provided with channels for circulating the reagents.

Further characteristics and advantages of the invention will become better apparent from the following detailed description of a preferred but not exclusive embodiment of a fuel cell, illustrated by way of nonlimiting example in the accompanying drawings, wherein:
Figure 1 is a perspective view of a bipolar plate and of the corresponding membrane according to the invention;
Figure 2 is a perspective view of a bipolar plate and of the corresponding membrane according to the invention;
Figure 3 is an exploded perspective view of a first embodiment of a fuel cell according to the invention;
Figure 4 is an exploded perspective view of a second embodiment of a fuel cell according to the invention.

With reference to the figures, the reference numeral 1 generally designates a fuel cell according to the invention.

Each cell 1 is constituted by at least one pair 2 of bipolar plates 3 whose outer surfaces 4 are provided with contoured grooves 5 for conveying the reagents.

Respective membranes 6 which contain the surfaces of the electrodes 7 are interposed between the outer surfaces 4 of two contiguous plates 3: this constructive arrangement is constituted by a series of elementary cells, known as MEA (Membrane Electrode Assembly), which are mutually separated by a current collector known as bipolar plate 3. The elementary cells generate a current which depends on their size, at a voltage comprised between 1 V when the circuit is open and 0.6 V when a full load is applied. In order to raise the voltage to a value which is suitable for applications, it is necessary to stack various MEA elements (i.e., the membrane 6 with its electrodes 7) in series so as to add the individual potential differences.

The electrodes 7 are generally made of porous material and are delimited by a perimetric border 8, which is made of dielectric material (an electrical insulator) which has good properties of mechanical resistance to infiltrations of fluids. The border 8 is interposed between the two contiguous plates 3 and clamped between them, giving their coupling the necessary tightness against the seepage of reagents.

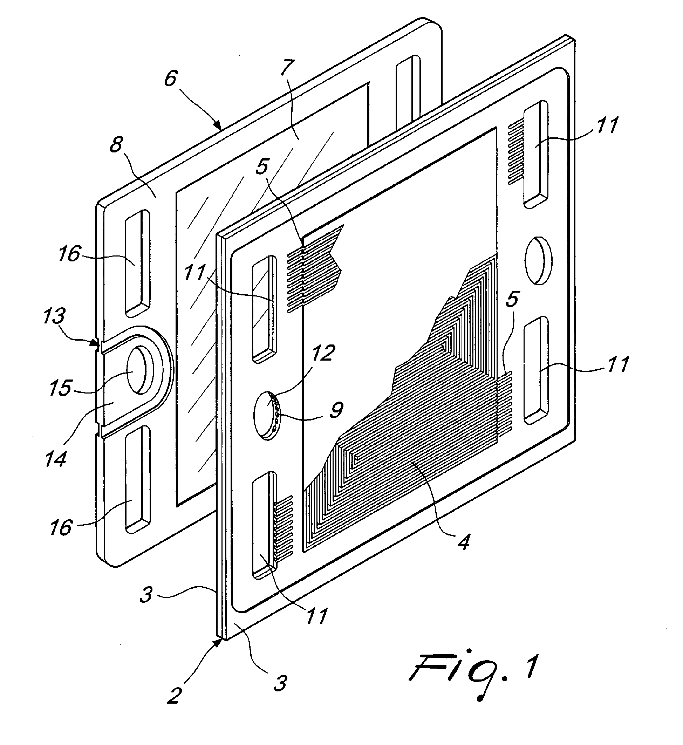

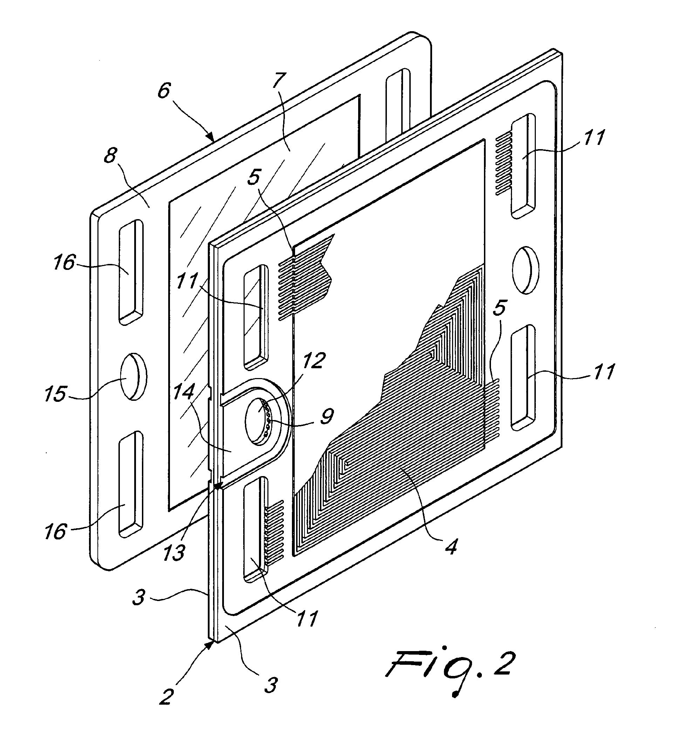

The plates 3 delimit, together with their internal surfaces 9 (not shown in the figure), conveniently provided with channels (a trace of which can be seen in Figures 1 and 2 at the coolant inflow-outflow area), a path for suitable flows of refrigerating fluid. The refrigerating fluid can be simply water or liquids or gases at a controlled temperature.

A region 13 which is open toward the outside environment is provided between the elementary cell 10, constituted by manifolds 11 for the inflow and outflow of suitable reagents and by the contoured grooves 5 provided on the outer surface 4 of the plates 3 between which the respective membrane 6 is interposed, and the cooling circuits, which are constituted by said paths for the cooling fluid and by the respective areas 12 for its inflow and outflow, which are formed between two internal surfaces of contiguous plates 3, said open region being adapted to drain externally any leaks of the cooling circuit, preventing the inflow of said leaks (therefore the inflow of cooling fluid) in the surfaces provided with channels for circulating the reagents: the mixing of the cooling fluid with the reagents would entail assured malfunctions of the cell 1 and consequent damage thereto.

According to the embodiments shown in the figures, the cooling circuit is formed by two facing internal surfaces of two mutually coupled contiguous plates 3: in this manner, said circuit is formed by the mutual contact of the crests that delimit the channels 9 on each of the surfaces 4 of the plate 3.

The cooling circuit is delimited externally by the perimetric edges that surround completely the areas affected by the channel 9. Each of said edges is rigidly coupled to the internal surface of a respective plate 3.

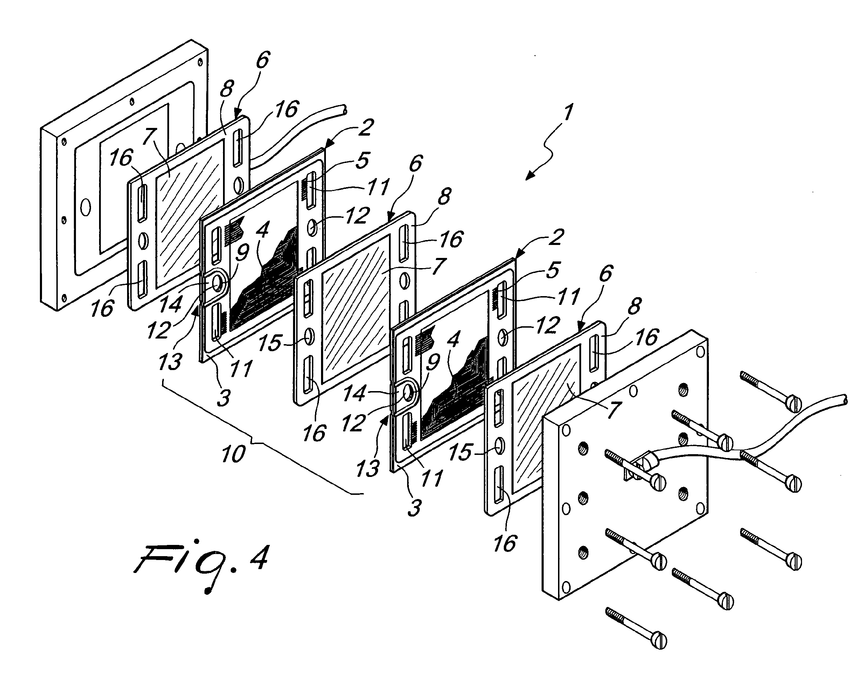

With reference to a first embodiment, shown in Figures 2 and 4, the perimetric edges can thus have suitable discontinuities which constitute outward openings 13 for draining cooling fluid which has flowed out of said slotted paths.

In particular, the discontinuities that constitute the openings 13 can be arranged at the cooling fluid inflow and outflow areas 12; in this manner, whenever part of said fluid flows out of the respective cooling circuit, seeping at the inflow/outflow areas 12 (which are the regions most affected by this problem), it is collected within the opening 13 and drained externally. Of course, such drainage openings might be provided (and/or repeated) in several points of the outside perimeter of the internal surface of the plates 3, forming a plurality of preferential paths for draining leaked cooling fluids.

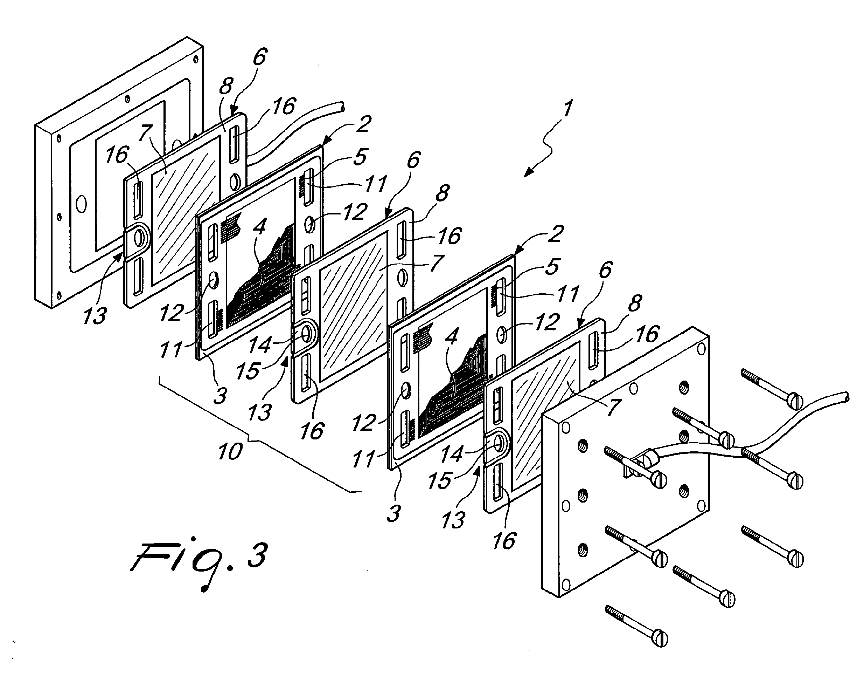

According to an alternative embodiment (shown in Figures 1 and 3), the membrane 6 can have, at the at least one portion 14 thereof which is adapted for contact on the part of the plate 3 that comprises at least one of the cooling fluid inflow and outflow regions 12, a peripheral slot 13 (in practice, an opening 13) which is open outward and delimits the inflow/outflow region 12.

The peripheral slot 13 of the membrane 6 is interposed between a hole 15 (which is suitable for alignment with a cooling fluid inflow/outflow region 12 when the entire cell 1 is assembled) and at least one passage 16, which corresponds to the inflow and outflow manifolds 11 of said reagents (this correspondence entails aligning the passage 16 with the respective manifold 11 when the cell 1 is assembled).

When the cell 1 is correctly assembled, any seepage of cooling fluid that occurs at the cooling fluid inflow/outflow regions 12 is drained externally through the peripheral slot 13 and therefore cannot contaminate the reagents.

It has thus been shown that the invention achieves the intended aim and objects.

The invention thus conceived is susceptible of numerous modifications and variations, all of which are within the scope of the appended claims.

All the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A fuel cell, of the type constituted by at least one pair (2) of bipolar plates (3) whose outer surfaces (4) are provided with contoured grooves (5) for conveying the reagents, between which respective membranes (6) which contain the surfaces of the electrodes (7) are interposed, said plates (3) delimiting, with their internal surfaces suitably provided with channels (9), a path for suitable flows of cooling fluid, **characterized in that** a region (13) which is open toward the outside environment is provided between the elementary cell (10), which is constituted by inflow and outflow manifolds (11) for suitable reagents and by said contoured grooves (5) provided on the outer surface (4) of said plates (3) between which the respective membrane (6) is interposed, and the cooling circuits, which are constituted by said paths for said cooling fluid and by the respective areas (12) for the inflow and outflow of said coolant fluid, which are formed between two surfaces of contiguous plates (3), said region being adapted to drain externally any leaks of the cooling circuit, preventing the introduction of said leaks into the surfaces (4) provided with grooves for circulating the reagents.

2. The cell according to claim 1, **characterized in that** said cooling circuit is formed between two facing surfaces of two mutually coupled contiguous plates (3).

3. The cell according to claim 2, **characterized in that** said cooling circuit is delimited by perimetric edges, each of which is rigidly coupled to the internal surface of a respective plate (3).

4. The cell according to claim 3, **characterized in that** said perimetric edges have discontinuities which constitute outward openings (13) for draining cooling fluid which has flowed out of said grooved paths (9).

5. The cell according to claim 4, **characterized in that** said discontinuities or openings (13) are arranged at the regions (12) for the inflow and outflow of the cooling fluid.

6. The cell according to claim 1, **characterized in that** said membrane (6) has, at the at least one portion (14) thereof which is suitable for contact against the part of the plate (3) which comprises at least one of the cooling fluid inflow and outflow regions (12), a peripheral slot (13) which is open outward and constitutes an opening (13) and delimits said inflow/outflow region (12).

7. The cell according to claim 6, **characterized in that** said peripheral slot (13) of the membrane (6) is interposed between a hole (15) which is suitable for alignment with a cooling fluid inflow/outflow region (12) and at least one passage (16) which corresponds to the inflow and outflow manifolds (11) for said reagents, said correspondence entailing the alignment of the passage (16) with the respective manifold (11) when the cell (1) is assembled.

## Amended claims

### Amended claims in accordance with Rule 137(2) EPC.

**1.** A fuel cell, comprising at least one pair (2) of bipolar plates (3) having outer surfaces (4) that are provided with contoured grooves (5) for conveying the reagents, between which respective membranes (6) which contain the surfaces of the electrodes (7) are interposed, so as to form an elementary cell (10), said plates (3) further having internal surfaces provided with channels (9) that form a path for suitable flows of cooling fluid, and said membranes (6) comprising a perimetric border (8) delimiting said electrodes (7), and said perimetric border (8) being interposed and clamped between two contiguous said bipolar plates (3), said bipolar plates (3) having inflow and outflow manifolds (11) and said perimetric border (8) of said membrane (6) having passages (16) wherein said manifolds (11) and said passages (16) being aligned for feeding suitable reagents therethrough and communicating with said contoured grooves (5) provided on the outer surface (4) of said plates (3) between which the respective membrane (6) is interposed for conveying the reagents through said grooves (5), and the cooling circuits, which are constituted by said paths for said cooling fluid and by respective areas (12) for the inflow and outflow of said coolant fluid, which are formed between two surfaces of contiguous plates (3), each of said membranes (6) comprising a hole (15) aligned with said cooling inflow/outflow areas (12) of said plates (3), **characterized in that** a region (13) which is open toward the outside environment is provided between the aligned manifolds (11) and passages (16) and the aligned cooling inflow/outflow areas (12) and holes (15) to drain externally any leaks of the cooling circuit, preventing the introduction of said leaks into the surfaces (4) provided with grooves for circulating the reagents, said region being formed by an opening or peripheral slot (13) in the outer surfaces of either said perimetric border (8) or of said bipolar plates (3) about a respective portion (14) arranged between the aligned manifolds (11) and passages (16) and the aligned cooling inflow/outflow areas (12) and holes (15), and said opening or peripheral slot (13) being empty when said elementary cell (10) is formed and being open toward the outside environment in a direction away from said electrodes (7) of said membranes (6).

**2.** The cell according to claim 1, **characterized in that** said cooling circuit is formed between two facing surfaces of two mutually coupled contiguous plates (3).

**3.** The cell according to claim 2, **characterized in that** said cooling circuit is delimited by perimetric edges, each of which is rigidly coupled to the internal surface of a respective plate (3).

**4.** The cell according to claim 3, **characterized in that** said perimetric edges have discontinuities which constitute outward openings (13) for draining cooling fluid which has flowed out of said grooved paths (9).

**5.** The cell according to claim 4, **characterized in that** said discontinuities or openings (13) are arranged at the regions (12) for the inflow and outflow of the cooling fluid.

**6.** The cell according to claim 1, **characterized in that** said membrane (6) has, at the at least one portion (14) thereof which is suitable for contact against the part of the plate (3) which comprises at least one of the cooling fluid inflow and outflow regions (12), a peripheral slot (13) which is open outward and constitutes an opening (13) and delimits said inflow/outflow region (12).

**7.** The cell according to claim 6, **characterized in that** said peripheral slot (13) of the membrane (6) is interposed between a hole (15) which is suitable for alignment with a cooling fluid inflow/outflow region (12) and at least one passage (16) which corresponds to the inflow and outflow manifolds (11) for said reagents, said correspondence entailing the alignment of the passage (16) with the respective manifold (11) when the cell (1) is assembled.
